# EUROPEAN PATENT APPLICATION

(11) **EP 1 708 492 A2**
(43) Date of publication of application: **04.10.2006**
(21) Application number: 06112094.5
(22) Date of filing: 31.03.2006
(51) Int. Cl.: H04N 5/21

(54) **Noise reducing apparatus and noise reducing method**

(30) Priority: 31.03.2005 JP 2005104964
(71) Applicant: Pioneer Corporation, Meguro-ku, Tokyo (JP)
(72) Inventor: Kai, Noriyuki Pioneer Corporation, Ohta-ku Tokyo (JP); Honda, Hirofumi Pioneer Corporation, Nakakoma-gun Yamanashi (JP); Kawaguchi, Hirofumi Pioneer Corporation, Nakakoma-gun Yamanashi (JP)
(74) Representative: Viering, Jentschura & Partner

(57) **Abstract**

The movement of an image between the image information of a current frame and the image information of a frame which is one, two, or three frames prior to the current frame is detected. On the basis of the detection result, a noise reducing process is performed. Moreover, identity between the pixel information of the current frame about a pixel which is currently the target of the process and the pixel information of the current frame or the frame which is one, two, or three frames prior to the current frame about a plurality of pixels located near the target pixel is detected. On the basis of the detection result, the noise reducing process is performed.

## Description

### BACKGROUND OF THE INVENTION

### 1. Field of the Invention

The present invention relates to a noise reducing apparatus for and a noise reducing method of reducing noise included in a video image or an image.

### 2. Description of the Related Art

As the noise reducing apparatus for reducing noise included in a video image or an image, there are generally listed a one-dimensional noise reducing apparatus which uses a correlation between adjacent picture elements (hereinafter referred to as pixels) in the same line, a two-dimensional noise reducing apparatus which uses a correlation between adjacent lines, and a three-dimensional noise reducing apparatus which uses a correlation between two adjacent frames. These noise reducing apparatuses have the following characteristics.

The three-dimensional noise reducing apparatus performs a noise reducing process by using information (brightness information or color information) about a pixel on the same coordinates in image information of a frame which is one frame prior to a current frame. Thus, if (i) the image stays still and (ii) identity between the image information of the frame which is one frame prior to the current frame and the image information of the current frame is maintained, the three-dimensional noise reducing apparatus shows an excellent noise removal effect. However, if the image is moving (i.e. the image changes) and the identity between the image information of the frame which is one frame prior to the current frame and the image information of the current frame is lacked, the noise reducing process performed by the three-dimensional noise reducing apparatus deteriorates image quality, such as the trailing tail of the video image.

As opposed to this, the one-dimensional noise reducing apparatus performs the noise reducing process by using the information about adjacent pixels in the horizontal direction of a screen. Moreover, the two-dimensional noise reducing apparatus performs the noise reducing process by using the information about adjacent pixels in the vertical direction of the screen. Thus, according to the one-dimensional noise reducing apparatus or the two-dimensional noise reducing apparatus, as long as there is the identity between the information about the adjacent pixels, a certain noise reduction effect is obtained, regardless of whether the image stays still or is moving. However, if there is not any identity between the information about the adjacent pixels, the resolution of the video image decreases.

Nowadays, in view of the characteristic of each noise reducing apparatus, the three-dimensional noise reducing apparatus and the one-dimensional / two-dimensional noise reducing apparatus are combined and used in many cases. Namely, the movement of the image is detected by a movement detection circuit, and the three-dimensional noise reducing apparatus and the one-dimensional / two-dimensional noise reducing apparatus are switched to each other, depending on whether or not there is a movement in the image. By this, not the three-dimensional noise reducing apparatus but the one-dimensional / two-dimensional noise reducing apparatus performs the noise reducing process for the image in motion, so that it is possible to prevent the trailing tail of the video image.

### SUMMARY OF THE INVENTION

However, even if the three-dimensional noise reducing apparatus and the one-dimensional / two-dimensional noise reducing apparatus are combined, there is still such a problem that it is difficult to obtain sufficiently good image quality.

For example, if there is an instant and quick movement in a video image, such as a video image obtained when the flash of a camera is used to take a picture and a video image obtained when a car (or the like) cuts across in front of a camera, the noise reducing process is performed by the one-dimensional / two-dimensional noise reducing apparatus. However, the common one-dimensional / two-dimensional noise reducing apparatus always performs the noise reducing process by using the information about adjacent pixels in a certain direction. Thus, if there is not any identity between the information about the adjacent pixels, the resolution of the video image decreases. As a result, it is hardly possible to obtain sufficiently good image quality.

Moreover, if there is a relatively mild movement in one portion of the image, it is possible to sensitively switch the noise reducing process performed by the three-dimensional noise reducing apparatus and the noise reducing process performed by the one-dimensional / two-dimensional noise reducing apparatus, by using a highly accurate movement detection circuit. Moreover, in such a case, a technology of combining the effect of the noise reducing process performed by the three-dimensional noise reducing apparatus and the effect of the noise reducing process performed by the one-dimensional / two-dimensional noise reducing apparatus in an appropriate ratio is also generally used. According to this technology, the improvement of the image quality is expected, as compared to the case where the noise reducing process is always performed by the one-dimensional / two-dimensional noise reducing apparatus. However, the common three-dimensional noise reducing apparatus always performs the noise reducing process by using the information about a pixel on the same coordinates in the image information of the frame which is one frame prior to the current frame. Thus, if the information about the pixel on the same coordinates of the frame which is one frame prior to the current frame has low identity, the resolution of a video image may decrease, or the video image may have the trailing tail in some cases. Moreover, the common one-dimensional / two-dimensional noise reducing apparatus always performs the noise reducing process by using the information about adjacent pixels in a certain direction. Thus, if there is not any identity between the information about the adjacent pixels, the resolution of the video image decreases. As a result, even if the noise reducing process performed by the three-dimensional noise reducing apparatus and the noise reducing process performed by the one-dimensional / two-dimensional noise reducing apparatus are sensitively switched, or even if the effects of the both processes are combined, yet, it is hardly possible to obtain sufficiently good image quality.

It is therefore an object of the present invention to provide a noise reducing apparatus, a noise reducing method, a television receiver, a video recording / reproducing apparatus, and a computer program, in which it is possible to prevent the decrease of the video resolution or the occurrence of the trailing tail caused by the noise reducing process and it is possible to obtain sufficiently good image quality.

The above object of the present invention can be achieved by a first noise reducing apparatus provided with: a first storing device for storing therein image information of a frame which is one frame prior to a current frame; a second storing device for storing therein image information of a frame which is n frames prior to the current frame(n is an integer of two or more); a ratio setting device for setting a ratio between the image information of the frame which is one frame prior to the current frame and the image information of the frame which is n frames prior to the current frame (including a case where one is 0 and the other is 1); a combined information generating device for generating combined information obtained by mutually combining the image information of the frame which is one frame prior to the current frame and the image information of the frame which is n frames prior to the current frame, in accordance with the ratio; and a noise reducing device for performing a noise reducing process for image information of the current frame, by using the combined information.

The above object of the present invention can be also achieved by one aspect of the first noise reducing apparatus, wherein the one aspect of the first noise reducing apparatus is further provided with a movement detection device for detecting movement of an image between the frame which is one frame prior to the current frame and the current frame, and movement of an image between the frame which is n frames prior to the current frame and the current frame, and the ratio setting device sets the ratio on the basis of a detection result of the movement detecting device.

The above object of the present invention can be also achieved by another aspect of the first noise reducing apparatus, wherein the noise reducing device is provided with an adding device for adding the combined information and the image information of the current frame.

The above object of the present invention can be also achieved by a second noise reducing apparatus provided with: a ratio setting device for setting a ratio between m pixel information corresponding to m second pixels (m is an integer of two or more) located near a first pixel (including a case where the ratio of one pixel information is 1 and a case where the ratio of 1 to (m-1) pixel information is 0); a combined information generating device for generating combined information obtained by mutually combining the m pixel information, in accordance with the ratio; and a noise reducing device for performing a noise reducing process for pixel information corresponding to the first pixel, by using the combined information.

The above object of the present invention can be also achieved by a third noise reducing apparatus provided with: a storing device for storing therein image information of a frame which is one frame prior to a current frame; a ratio setting device for setting a ratio between m pixel information, included in the image information of the frame which is one frame prior to the current information and corresponding to m second pixels (m is an integer of two or more) located near a first pixel (including a case where the ratio of one pixel information is 1 and a case where the ratio of 1 to (m―1) pixel information is 0); a combined information generating device for generating combined information obtained by mutually combining the m pixel information, in accordance with the ratio; and a noise reducing device for performing a noise reducing process for pixel information of the current frame and corresponding to the first pixel, by using the combined information.

The above object of the present invention can be also achieved by a fourth noise reducing apparatus provided with: a storing device for storing therein image information of a frame which is n frames prior to a current frame (n is an integer of two or more); a ratio setting device for setting a ratio between m pixel information, included in the image information of the frame which is n frames prior to the current frame and corresponding to m second pixels (m is an integer of two or more) located near a first pixel (including a case where the ratio of one pixel information is 1 and a case where the ratio of 1 to (m-1) pixel information is 0); a combined information generating device for generating combined information obtained by mutually combining the m pixel information, in accordance with the ratio; and a noise reducing device for performing a noise reducing process for pixel information of the current frame and corresponding to the first pixel, by using the combined information.

The above object of the present invention can be also achieved by one aspect of the second noise reducing apparatus, wherein the second noise reducing apparatus is further provided with an identity detecting device for detecting identity between the pixel information corresponding to the first pixel and the pixel information corresponding to the second pixel, and the ratio setting device sets the ratio on the basis of a detection result of the identity detecting device.

The above object of the present invention can be also achieved by another aspect of the second noise reducing apparatus, wherein the identity detecting device refers to a history in the past about the identity between the pixel information corresponding to the first pixel and the pixel information corresponding to the second pixel, in order to detect the identity between the pixel information corresponding to the first pixel and the pixel information corresponding to the second pixel.

The above object of the present invention can be also achieved by another aspect of the second noise reducing apparatus, wherein the identity detecting device refers to a detection result of identity between pixel information about a third pixel which is different from the first pixel and pixel information about a fourth pixel located near the third pixel, in order to detect the identity between the pixel information corresponding to the first pixel and the pixel information corresponding to the second pixel.

The above object of the present invention can be also achieved by another aspect of the second noise reducing apparatus, wherein the identity detecting device refers to a locus of movement of an image corresponding to image information including the pixel information corresponding to the first pixel or the pixel information corresponding to the second pixel, in order to detect the identity between the pixel information corresponding to the first pixel and the pixel information corresponding to the second pixel.

The above object of the present invention can be also achieved by another aspect of the second noise reducing apparatus, wherein the noise reducing device is provided with an adding device for adding the combined information and pixel information of the current frame which corresponds to the first pixel.

The above object of the present invention can be also achieved by a noise reducing method provided with: a ratio setting process of setting a ratio between image information of a frame which is one frame prior to a current frame and image information of a frame which is n frames prior to the current frame (including a case where one is 0 and the other is 1); a combined information generating process of generating combined information obtained by mutually combining the image information of the frame which is one frame prior to the current frame and the image information of the frame which is n frames prior to the current frame, in accordance with the ratio; and a noise reducing process of performing a noise reducing process for image information of the current frame, by using the combined information.

The above object of the present invention can be also achieved by a noise reducing method provided with: a ratio setting process of setting a ratio between m pixel information corresponding to m second pixels (m is an integer of two or more) located near a first pixel (including a case where the ratio of one pixel information is 1 and a case where the ratio of 1 to (m-1) pixel information is 0); a combined information generating process of generating combined information obtained by mutually combining the m pixel information, in accordance with the ratio; and a noise reducing process of performing a noise reducing process for pixel information corresponding to the first pixel, by using the combined information.

The above object of the present invention can be also achieved by a noise reducing process provided with: a ratio setting process of setting a ratio between m pixel information, included in image information of a frame which is one frame prior to a current frame and corresponding to m second pixels (m is an integer of two or more) located near a first pixel (including a case where the ratio of one pixel information is 1 and a case where the ratio of 1 to (m-1) pixel information is 0); a combined information generating process of generating combined information obtained by mutually combining the m pixel information, in accordance with the ratio; and a noise reducing process of performing a noise reducing process for pixel information of the current frame and corresponding to the first pixel, by using the combined information.

The above object of the present invention can be also achieved by a noise reducing method provided with: a ratio setting process of setting a ratio between m pixel information, included in image information of a frame which is n frames prior to a current frame and corresponding to m second pixels (m is an integer of two or more) located near a first pixel (including a case where the ratio of one pixel information is 1 and a case where the ratio of 1 to (m-1) pixel information is 0); a combined information generating process of generating combined information obtained by mutually combining the m pixel information, in accordance with the ratio; and a noise reducing process of performing a noise reducing process for pixel information of the current frame and corresponding to the first pixel, by using the combined information.

The above object of the present invention can be also achieved by a television receiver provided with: the above-mentioned noise reducing apparatus of the present invention (including its various aspects).

The above object of the present invention can be also achieved by a video recording / reproducing apparatus provided with: the above-mentioned noise reducing apparatus of the present invention (including its various aspects).

The above object of the present invention can be also achieved by a computer program to make the computer function as the above-mentioned noise reducing apparatus of the present invention (including its various aspects).

The above object of the present invention can be also achieved by a computer program product in a computer-readable medium for tangibly embodying a program of instructions executable by a computer, to make the computer function as the above-mentioned noise reducing apparatus of the present invention (including its various aspects).

### BRIEF DESCRIPTION OF THE DRAWINGS

FIG. 1 is a circuit diagram showing a first embodiment of the noise reducing apparatus of the present invention;
FIG. 2 is an explanatory diagram showing a noise reducing process performed by the noise reducing apparatus in FIG. 1;
FIG. 3 is a circuit diagram showing a second embodiment of the noise reducing apparatus of the present invention;
FIG. 4 is an explanatory diagram showing a pixel corresponding to pixel information which is the target of a three-dimensional noise reproducing process;
FIG. 5 is an explanatory diagram showing a pixel corresponding to pixel information which is the target of a one-dimensional noise reproducing process and a two-dimensional noise reproducing process;
FIG. 6 is an explanatory diagram showing a noise reducing process performed by the noise reducing apparatus in FIG. 3;
FIG. 7 is an explanatory diagram showing a noise reducing process performed by the noise reducing apparatus in FIG. 3;
FIG. 8 is an explanatory diagram showing a noise reducing process performed by the noise reducing apparatus in FIG. 3;
FIG. 9 is an explanatory diagram showing the noise reducing process performed by the noise reducing apparatus in FIG. 3;
FIG. 10 is a circuit diagram showing a third embodiment of the noise reducing apparatus of the present invention;
FIG. 11 is a circuit diagram showing a fourth embodiment of the noise reducing apparatus of the present invention; and
FIG. 12 is an explanatory diagram showing a television receiving system.

### DETAILED DESCRIPTION OF THE PREFERRED EMBODIMENTS

Hereinafter, the embodiments of the present invention will be discussed with reference to the drawings.

### (First Embodiment)

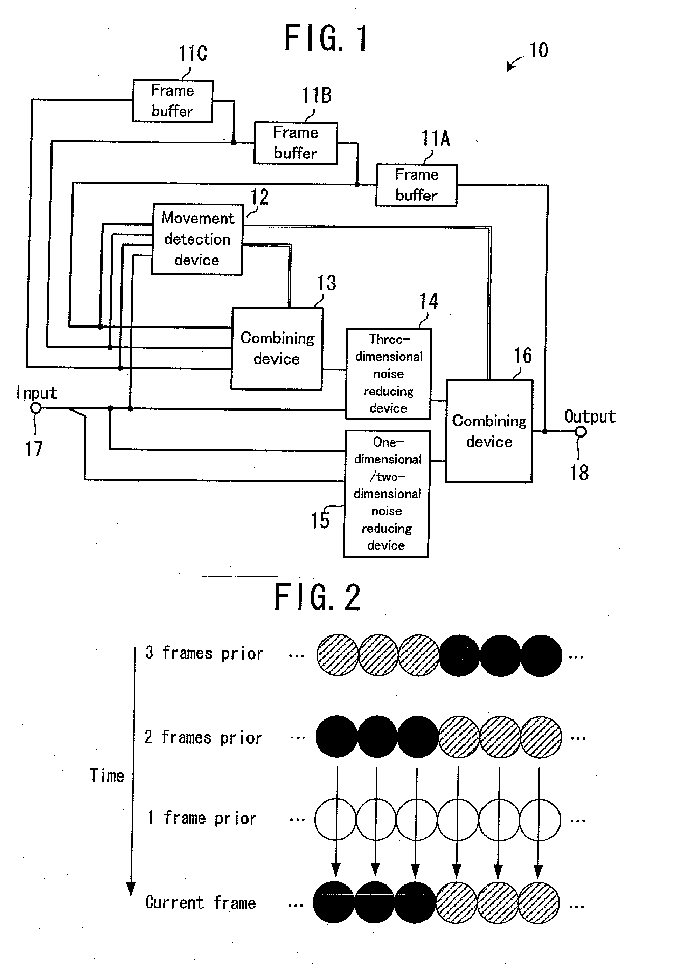

FIG. 1 shows the first embodiment of the noise reducing apparatus and the noise reducing method of the present invention. A noise reducing apparatus 10 in FIG. 1 is an apparatus for performing a noise reducing process in order to reduce noise included in a video image or an image. The noise reducing apparatus 10 has a one-dimensional noise reducing function which uses a correlation between two adjacent pixels in the same line, a two-dimensional noise reducing function which uses a correlation between two adjacent lines, and a three-dimensional noise reducing function which uses a correlation among a plurality of adjacent frames. The noise reducing apparatus 10 is provided with: frame buffers 11A, 11B, and 11C; a movement detection device 12; a combining device 13; a three-dimensional noise reducing device 14; a one-dimensional / two-dimensional noise reducing device 15; and a combining device 16. Out of these constitutional elements, the frame buffers 11A to 11C, the movement detection device 12, the combining device 13 and the three-dimensional noise reducing device 14 are mainly to realize the three-dimensional noise reducing function. On the other hand, the one-dimensional / two-dimensional noise reducing device 15 is mainly to realize the one-dimensional noise reducing function and the two-dimensional noise reducing function.

Each of the frame buffers 11A to 11C stores the image information of one frame. Namely, if a frame which is currently the target of the process is referred to as a "current frame", the frame buffer 11A stores the image information of a frame which is one frame prior to the current frame. The frame buffer 11B stores the image information of a frame which is two frames prior to the current frame. The frame buffer 11C stores the image information of a frame which is three frames prior to the current frame. Each of the frame buffers 11A to 11C can be constructed from a storage element, such as a semiconductor memory.

The movement detection device 12 detects the movement of the image along with the plurality of frames. Specifically, the movement detection device 12 detects each of the movement of the image between the frame which is one frame prior to the current frame and the current frame, the movement of the image between the frame which is two frames prior to the current frame and the current frame, and the movement of the image between the frame which is three frames prior to the current frame and the current frame. The movement detection of the image can be performed by comparing the image information (brightness information or color information, etc.) of the frame which is one, two or three frames prior to the current frame, stored by the frame buffer 11A, 11B or 11C, with the image information of the current frame inputted to the movement detection device 12 through an input terminal 17. For example, the movement detection of the image can be performed by calculating a difference between the image information (brightness information or color information, etc.) of the frame which is one, two or three frames prior to the current frame and the image information of the current frame. In other words, if there is not any difference between the image information of the frame which is one, two or three frames prior to the current frame and the image information of the current frame, it is possible to judge that the image stays still. On the other hand, if there is a difference between the image information of the frame which is one, two or three frames prior to the current frame and the image information of the current frame, it is possible to judge that there is a movement in the image. Moreover, the comparison between the image information of the frame which is one, two or three frames prior to the current frame and the image information of the current frame is performed for each pixel. By this, it is possible to precisely detect the movement of the image. Moreover, the movement detection device 12 provides the combining devices 13 and 16 with movement information which indicates each of the presence or absence, amount, direction or the like of the movement of the image (i) between the frame which is one frame prior to the current frame and the current frame, (ii) between the frame which is two frames prior to the current frame and the current frame and (iii) between the frame which is three frames prior to the current frame and the current frame.

The combining device 13 has two functions. One is a function of setting a ratio for each of the image information of the frame which is one frame prior to the current frame, the image information of the frame which is two frames prior to the current frame and the image information of the frame which is three frames prior to the current frame. For example, the combining device 13 sets a ratio of 0.7 for the image information of the frame which is one frame prior to the current frame, a ratio of 0.2 for the image information of the frame which is two frames prior to the current frame, and a ratio of 0.1 for the image information of the frame which is three frames prior to the current frame. Moreover, the combining device 13 can set a ratio of 0 for the image information of the frame which is one frame prior to the current frame, a ratio of 1 for the image information of the frame which is two frames prior to the current frame, and a ratio of 0 for the image information of the frame which is three frames prior to the current frame. The setting of the ratio is performed on the basis of the movement information provided from the movement detection device 12. For example, if the amount of movement of the image between the frame which is one frame prior to the current frame and the current frame is large, the ratio set for the image information of the frame which is one frame prior to the current frame is 0 or near 0.

The other function of the combining device 13 is a function of mutually combining the image information of the frame which is one frame prior to the current frame, the image information of the frame which is two frames prior to the current frame, and the image information of the frame which is three frames prior to the current frame, in accordance with the set ratio. The image information combined by this function is provided for the three-dimensional noise reducing device 14, as combined information. Incidentally, when the ratio of 0 for the image information of the frame which is one frame prior to the current frame, the ratio of 1 for the image information of the frame which is two frames prior to the current frame and the ratio of 0 for the image information of the frame which is three frames prior to the current frame are set by the combining device 13, respectively, only the image information of the frame which is two frames prior to the current frame is provided for the three-dimensional noise reducing device 14, as the combined information. This means that the image information of the frame which is two frames prior to the current frame is selected from the image information of the frame which is one frame prior to the current frame, the image information of the frame which is two frames prior to the current frame and the image information of the frame which is three frames prior to the current frame.

The three-dimensional noise reducing device 14 performs a three-dimensional noise reducing process for the image information of the current frame by using the combined information provided from the combining information 13. For example, the three-dimensional noise reducing device 14 sets the ratio according to noise reduction intensity, for each of the image information of the current frame and the combined information, and adds the image information of the current frame and the combined information in accordance with the ratio. Incidentally, as an operating method in the three-dimensional noise reducing process of the three-dimensional noise reducing device 14, it is possible to adopt a known operating method in the three-dimensional noise reducing process.

The one-dimensional / two-dimensional noise reducing device 15 performs a one-dimensional noise reducing process or a two-dimensional noise reducing process for the image information of the current frame. Namely, the one-dimensional / two-dimensional noise reducing device 15 performs the one-dimensional noise reducing process for the information about each pixel in each line of the current frame, by using information about a pixel / pixels adjacent to the each pixel (relevant pixel). Moreover, the one-dimensional / two-dimensional noise reducing device 15 performs the two-dimensional noise reducing process for the image information about each line of the current frame, by using image information about one line prior to the each line (relevant line). Incidentally, as the one-dimensional noise reducing process and the two-dimensional noise reducing process of the one-dimensional / two-dimensional noise reducing device 15, it is possible to adopt a known one-dimensional noise reducing process and a known two-dimensional noise reducing process. Moreover, a known technology can be adopted to the judgment or the determinant of (i) which of the one-dimensional noise reducing process and the two-dimensional noise reducing process should be performed to one pixel information, and (ii) how to set a ratio for performing the one-dimensional noise reducing process and a ratio for performing the two-dimensional noise reducing process.

The combining device 16 sets a ratio for each of (i) the image information of the current frame in which the three-dimensional noise reducing process is performed by the three-dimensional noise reducing device 14 and (ii) the image information of the current frame in which the one-dimensional noise reducing process and the two-dimensional noise reducing process are performed by the one-dimensional / two-dimensional noise reducing device 15. The combining device 16 combines the both image information in accordance with the ratio. The combined image information of the current frame is outputted to an output terminal 18 and the frame buffer 11A. The setting of the ratio is performed on the basis of the movement information provided from the movement detection device 12. For example, if the amount of movement of the image between the frames is large, the ratio set for the image information in which the three-dimensional noise reducing process is performed is 0 or near 0. Incidentally, the combining device 16 can set a ratio of 1 for the image information of the current frame in which the three-dimensional noise reducing process is performed, and a ratio of 0 for the image information of the current frame in which the one-dimensional noise reducing process and the two-dimensional noise reducing process are performed. In this case, only the image information of the current frame in which the three-dimensional noise reducing process is performed is outputted to the output terminal 18 and the frame buffer 11A. This means that the image information of the current frame in which the three-dimensional noise reducing process is performed is selected from the image information of the current frame in which the three-dimensional noise reducing process is performed and the image information of the current frame in which the one-dimensional noise reducing process and the two-dimensional noise reducing process are performed.

The movement detection device 12, the combining devices 13 and 16, and the noise reducing devices 14 and 15 can be constructed from an operating circuit and a storage element, such as a semiconductor memory.

The noise reducing apparatus 10 operates as follows. When the image information of the current frame is inputted to the input terminal 17, the image information of the current frame is inputted to the movement detection device 12, the three-dimensional noise reducing device 14, and the one-dimensional / two-dimensional noise reducing device 15. The movement detection device 12 detects each of (i) the movement of the image between the frame which is one frame prior to the current frame and the current frame, (ii) the movement of the image between the frame which is two frames prior to the current frame and the current frame and (iii) the movement of the image between the frame which is three frames prior to the current frame and the current frame. Then, the movement detection device 12 generates the movement information which indicates each of the presence or absence, amount, direction or the like of the movement of the image, and outputs this movement information to the combining devices 13 and 16. Then, the combining device 13 sets a ratio on the basis of the movement information, for each of (i) the image information of the frame which is one frame prior to the current frame, (ii) the image information of the frame which is two frames prior to the current frame and (iii) the image information of the frame which is three frames prior to the current frame. Moreover, the combining device 13 mutually combines the image information of the frame which is one frame prior to the current frame, the image information of the frame which is two frames prior to the current frame, and the image information of the frame which is three frames prior to the current frame, in accordance with the set ratio. The combining device 13 outputs the image information obtained by this to the three-dimensional noise reducing device 14, as the combined information. Then, the three-dimensional noise reducing device 14 performs the three-dimensional noise reducing process for the image information of the current frame, by using the combined information outputted from the combining information 13.

On the other hand, the one-dimensional / two-dimensional noise reducing device 15 performs the one-dimensional noise reducing process and a two-dimensional noise reducing process for the image information of the current frame.

Then, the combining device 16 sets a ratio, on the basis of the movement information, for each of (i) the image information of the current frame in which the three-dimensional noise reducing process is performed by the three-dimensional noise reducing device 14 and (ii) the image information of the current frame in which the one-dimensional noise reducing process and the two-dimensional noise reducing process are performed by the one-dimensional / two-dimensional noise reducing device 15. The combined device 16 combines the both image information in accordance with the ratio. The image information of the current frame combined by the combining device 16 is outputted to the output terminal 18 and the frame buffer 11A. Then, the shift process of the image information is performed on the frame buffers 11A to 11C. In other words, the image information of the frame which is two frames prior to the current frame, stored in the frame buffer 11B, is stored into the frame buffer 11C. Then, the image information of the frame which is one frame prior to the current frame, stored in the frame buffer 11A, is stored into the frame buffer 11B. Then, the image information of the current frame, outputted from the combining device 16, is stored into the frame buffer 11A.

FIG. 2 shows a noise reducing process performed by the noise reducing apparatus 10. A small circular graphic in FIG. 2 shows a pixel. Six pixels at the lowest level are pixels which constitute one portion of the image information of the current frame. Six pixels at the second lower level are pixels which constitute one portion of the image information of the frame which is one frame prior to the current frame. Six pixels at the third lower level are pixels which constitute one portion of the image information of the frame which is two frames prior to the current frame. Six pixels at the highest level are pixels which constitute one portion of the image information of the frame which is three frames prior to the current frame. Moreover, a certain pixel and a pixel just above or just under the certain pixel have the same coordinates in a screen. Moreover, a black graphic, a hatched graphic and a white graphic have different pixel information from each other. For example, the black graphics have the same pixel information, and the black graphic and the hatched graphic have different pixel information.

According to FIG. 2, an image has slightly moved between the frame which is three frames prior to the current frame and the current frame. The image stays still between the frame which is two frames prior to the current frame and the current frame. However, the image has greatly moved between the frame which is one frame prior to the current frame and the current frame. Such a video image is provided if there is an instantly quick movement in the video image, such as a case where the flash of a camera is used to take a picture. For example, the image of the frame which is one frame prior to the current frame is an image in the condition that the entire screen turns white due to the flash of the camera.

In the case as shown in FIG. 2, the movement detection device 12 of the noise reducing apparatus 10 generates the movement information which indicates a small amount of movement of the image between the frame which is three frames prior to the current frame and the current frame, the movement information which indicates no movement of the image between the frame which is two frames prior to the current frame and the current frame, and the movement information which indicates an extremely large amount of movement of the image between the frame which is one frame prior to the current frame and the current frame. The combining device 13 sets a ratio of 0 for the image information of the frame which is three frames prior to the current frame, a ratio of 1 for the image information of the frame which is two frames prior to the current frame, and a ratio of 0 for the image information of the frame which is one frame prior to the current frame, for example, in accordance with the movement information. The combining device 13 combines the three image information on the basis of the ratios. As a result, only the image information of the frame which is two frames prior to the current frame is provided for the three-dimensional noise reducing device 14, as the combined information. By this, the three-dimensional noise reducing device 14 performs the noise reducing process for the image information of the current frame, by using only the image information of the frame which is two frames prior to the current frame. Moreover, the combining device 16 sets a ratio of 1 for the image information of the current frame in which the three-dimensional noise reducing process is performed and a ratio of 0 for the image information of the current frame in which the one-dimensional noise reducing process and the two-dimensional noise reducing process are performed, for example, in accordance with the movement information. Then, the combining device 16 combines the both image information on the basis of the ratios, and outputs the combined image information of the current frame to the output terminal 18 and the like. As a result, only the image information of the current frame in which the three-dimensional noise reducing process is performed, as shown in FIG. 2, is outputted to the output terminal 18 and the like, as the image information of the current frame.

As described above, if there is an instantly quick movement in the video image, the noise reducing apparatus 10 can perform the three-dimensional noise reducing process, by using not the image in quick motion (i.e. the image of the frame which is one frame prior to the current frame), but the image before the quick movement (i.e. the image of the frame which is two frames prior to the current frame). By this, it is possible to remove noise, and it is also possible to prevent the trailing tail of the video image by the noise reducing process.

Moreover, even in the case where there is an instantly quick movement in the video image, if the image stays still before or after the instantly quick movement, the noise reducing apparatus 10 performs not the one-dimensional noise reducing process nor the two-dimensional noise reducing process but the three-dimensional noise reducing process. By this, it is possible to prevent bad effects caused by the one-dimensional noise reducing process or the two-dimensional noise reducing process, i.e. the reduction of the resolution of the video image.

As explained above, the noise reducing apparatus 10 uses not only the image information of the frame which is one frame prior to the current frame but also the image information of the frame which is two frames prior to the current frame and the image information of the frame which is three frames prior to the current frame, to thereby perform the three-dimensional noise reducing process. By this, it is possible to prevent the reduction of the resolution of the video image or the trailing tail of the video image, caused by the noise reducing process. Thus, it is possible to obtain sufficiently good image quality.

Incidentally, the frame buffer 11A is a specific example of the first storing device of the present invention, the frame buffers 11B and 11C are a specific example of the second storing device of the present invention, and the movement detection device 12 is a specific example of the movement detecting device of the present invention. Moreover, the combining device 13 is a specific example of the ratio setting device, the combined information generating device, the ratio setting process and the combined information generating process of the present invention. Moreover, the three-dimensional noise reducing device 14 is a specific example of the noise reducing device the adding device, and the noise reducing process of the present invention.

Moreover, in the noise reducing apparatus 10, the case where the three-dimensional noise reducing process is performed on the basis of the image information of the frame which is one frame prior to the current frame, the image information of the frame which is two frames prior to the current frame and the image information of the frame which is three frames prior to the current frame is exemplified. The present invention, however, is not limited to this. For example, the three-dimensional noise reducing process may be performed on the basis of the image information of the frame which is one frame prior to the current frame and the image information of the frame which is two frames prior to the current frame. Alternatively, the three-dimensional noise reducing process may be performed on the basis of a plurality of image information of frames which are four frames or more frames prior to the current frame, in addition to the image information of the frame which is one frame prior to the current frame, the image information of the frame which is two frames prior to the current frame and the image information of the frame which is three frames prior to the current frame.

Moreover, the movement detection device 12 may also refer to the detection result of identity between the pixel information about a different pixel which is different from the detection-target pixel and the pixel information about another pixel located near the different pixel, in order to detect the movement of the image. Moreover, the movement detection device 12 may also refer to the locus of movement of the image corresponding to the pixel information about the detection-target pixel and the pixel information about another pixel located near the detection-target pixel, in order to detect the movement of the image. The locus of the movement of the image can be known by the tracking of a history in the past about the movement detection results, or the operation or calculation of a movement vector.

Moreover, the noise reducing apparatus 10 has both the three-dimensional noise reducing function and the one-dimensional / two-dimensional noise reducing function; however, the present invention is not limited to this. For example, it may be a noise reducing apparatus which has only the three-dimensional noise reducing function to which the present invention is applied.

### (Second Embodiment)

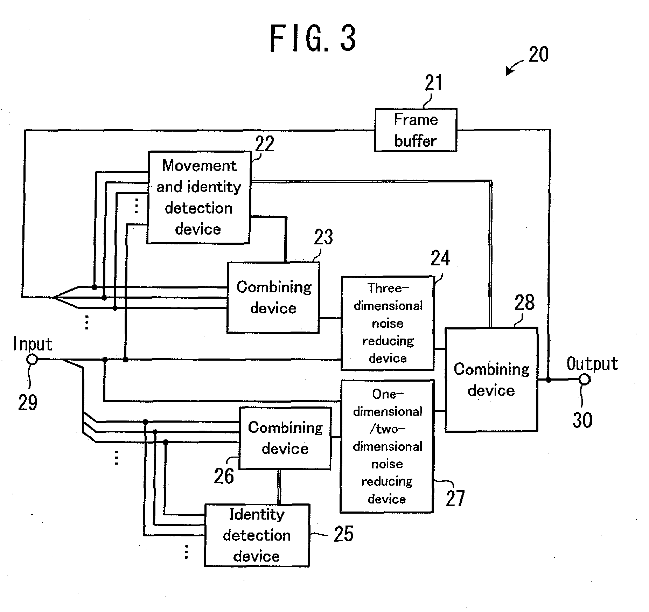

FIG. 3 shows the second embodiment of the noise reducing apparatus and the noise reducing method of the present invention. A noise reducing apparatus 20 in FIG. 3 is an apparatus for performing the noise reducing process in order to reduce noise included in a video image or an image. The noise reducing apparatus 20 has the one-dimensional noise reducing function, the two-dimensional noise reducing function, and the three-dimensional noise reducing function. The noise reducing apparatus 20 is provided with: a frame buffer 21; a movement and identity detection device 22; a combining device 23; a three-dimensional noise reducing device 24; an identity detection device 25; and a combining device 26; a one-dimensional / two-dimensional noise reducing device 27; and a combining device 28. Out of these constitutional elements, the frame buffer 21, the movement and identity detection device 22, the combining device 23, and the three-dimensional noise reducing device 24 are mainly to realize the three-dimensional noise reducing function. On the other hand, the identity detection device 25, the combining device 26, and the one-dimensional / two-dimensional noise reducing device 27 are mainly to realize the one-dimensional noise reducing function and the two-dimensional noise reducing function.

The frame buffer 21 stores the image information of a frame which is one frame prior to the current frame. The frame buffer 21 can be constructed from a storage element, such as a semiconductor memory.

The movement and identity detection device 22 has two functions. One is a function of detecting the movement of an image between the frame which is one frame prior to the current frame and the current frame. The movement detection of the image can be performed by comparing the image information of the frame which is one frame prior to the current frame, stored in the frame buffer 21, with the image information of the current frame inputted to the movement and identity detection device 22 through an input terminal 29. For example, the movement detection of the image can be performed by calculating the difference between the image information of the frame which is one frame prior to the current frame and the image information of the current frame. Moreover, the comparison between the image information of the frame which is one frame prior to the current frame and the image information of the current frame is performed for each pixel. Furthermore, the movement and identity detection device 22 provides the combining device 28 with movement information which indicates each of the presence or absence, amount, direction or the like of the movement of the image between the frame which is one frame prior to the current frame and the current frame.

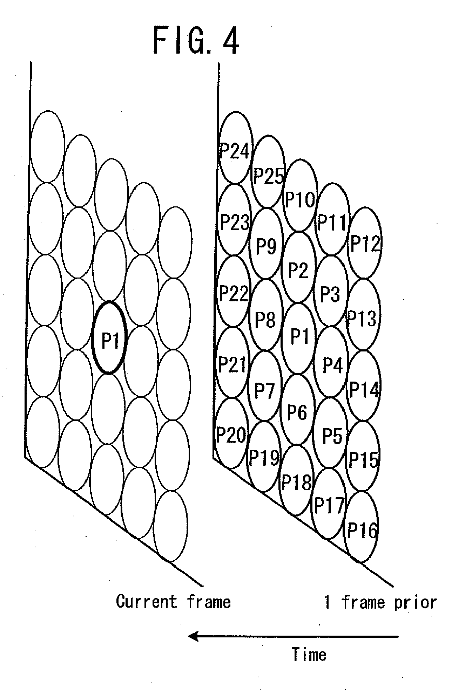

The other function of the movement and identity detection device 22 is a function of detecting identity between each pixel information of the current frame and each pixel information of the frame which is one fame prior to the current frame. The detection of the identity between the both pixel information can be performed by comparing pixel information (brightness information and color information, etc.) included in the image information of the frame which is one frame prior to the current frame, stored in the frame buffer 21, with pixel information of the current frame inputted to the movement and identity detection device 22 through the input terminal 29. As shown in FIG. 4, the movement and identity detection device 22 detects identity between the pixel information of the current frame and the pixel information of the frame which is one frame prior to the current frame, with respect to a pixel P1 having the same coordinates in the video display area. Moreover, the movement and identity detection device 22 detects identity between the pixel information of the current frame about the pixel P1 and the pixel information of the frame which is one frame prior to the current frame about a plurality of pixels P2 to P25 which are located near the pixel P1, for each of the pixels P2 to P25. Hereinafter, a pixel which is the target of the process is referred to as a "target pixel", and a pixel located near the target pixel is a "nearby pixel". Moreover, the movement and identity detection device 22 provides the combining device 23 with first identity information which indicates the presence or absence, degree or the like of identity between the pixel information of the current frame about the target pixel and the pixel information of the frame which is one frame prior to the current frame about a plurality of nearby pixels, for each of the target pixel and the plurality of nearby pixels.

The combining device 23 has two functions. One is a function of setting a ratio for each of (i) the pixel information of the frame which is one frame prior to the current frame about the target pixel and (ii) the pixel information of the frame which is one frame prior to the current frame about the plurality of nearby pixels. For example, as shown in FIG. 4, the combining device 23 sets a ratio of 0 for the pixel information of the frame which is one frame prior to the current frame about the target pixel P1, a ratio of 1 for the pixel information of the frame which is one frame prior to the current frame about the nearby pixel P2, and a ratio of 0 for the pixel information of the frame which is one frame prior to the current frame about the rest of the nearby pixels P3 to P25. The setting of the ratio is performed on the basis of the first identity information provided from the movement and identity detection device 22. For example, if the identity between the pixel information of the current frame about the target pixel P1 and the pixel information of the frame which is one frame prior to the current frame about the nearby pixel P2 is high, a large ratio is set for the pixel information of the frame which is one frame prior to the current frame about the nearby pixel P2.

The other function of the combining device 23 is a function of mutually combining (i) the pixel information of the frame which is one frame prior to the current frame about the target pixel and (ii) the pixel information of the frame which is one frame prior to the current frame about the nearby pixel or pixels, in accordance with the set ratio. The pixel information combined by this function is provided for the three-dimensional noise reducing device 24, as first combined information. Incidentally, when the ratio of 0 for the pixel information of the frame which is one frame prior to the current frame about the target pixel P1, the ratio of 1 for the pixel information of the frame which is one frame prior to the current frame about the nearby pixel P2 and the ratio of 0 for pixel information of the frame which is one frame prior to the current frame about the rest of the nearby pixels P3 to P25 are set by the combining device 23, respectively, only the pixel information of the frame which is one frame prior to the current frame about the nearby pixel P2 is provided for the three-dimensional noise reducing device 24, as the first combined information. This means that the pixel information of the frame which is one frame prior to the current frame about the nearby pixel P2 is selected from the pixel information of the frame which is one frame prior to the current frame about the target pixel P1 and the pixel information of the frame which is one frame prior to the current frame about the nearby pixels P2 to P25.

The three-dimensional noise reducing device 24 performs a three-dimensional noise reducing process for each pixel information included in the image information of the current frame, by using the first combined information provided from the combining device 23. As an operating method in the three-dimensional noise reducing process of the three-dimensional noise reducing device 24, it is possible to adopt a known operating method in the three-dimensional noise reducing process.

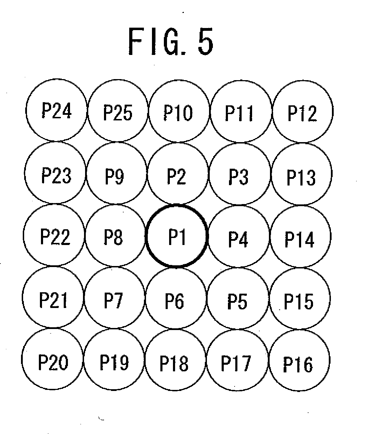

The identity detection device 25 detects identity between the pixel information about each target pixel and the pixel information about each nearby pixel in the current frame. For example, as shown in FIG. 5, the identity detection device 25 detects identity between the pixel information about the target pixel P1 and the pixel information about the plurality of nearby pixels P2 to P25 in the current frame, for each of the nearby pixels P2 to P25. The detection of the identity between the both pixel information can be performed by mutually comparing each of the pixel information (brightness information and color information, etc.) about the plurality of nearby pixels P2 to P25 with the pixel information about the target pixel P1. The identity detection device 25 provides the combining device 26 with second identity information which indicates the presence or absence, degree or the like of identity between the pixel information about the target pixel and the pixel information about the plurality of nearby pixels, in the current frame, for each of the plurality of nearby pixels.

The combining device 26 has two functions. One is a function of setting a ratio for each of the pixel information of the current frame about the plurality of nearby pixels. For example, as shown in FIG. 5, the combining device 26 sets a ratio for each of the pixel information of the current frame about the nearby pixels P2 to P25. Incidentally, the combining device 26 can set a ratio of 1 for the pixel information of the current frame about the nearby pixel P2 and a ratio of 0 for the pixel information of the current frame about the rest of the nearby pixels P3 to P25. The setting of the ratio is performed on the basis of the identity information provided from the identity detection device 25. For example, if the identity between the pixel information of the current frame about the target pixel P1 and the pixel information of the frame which is one frame prior to the current frame about the nearby pixel P2 is high, a large ratio is set for the pixel information of the current frame about the nearby pixel P2.

The other function of the combining device 26 is a function of mutually combining the pixel information about the nearby pixels of the current frame, in accordance with the set ratio. The pixel information of the current frame about the nearby pixels, combined by this function, is provided for the one-dimensional / two-dimensional noise reducing device 27, as second combined information. Incidentally, when the ratio of 1 for the pixel information of the current frame about the nearby pixel P2 and the ratio of 0 for the pixel information of the current frame about the rest of the nearby pixels P3 to P25 are set by the combining device 26, respectively, only the pixel information of the current frame about the nearby pixel P2 is provided for the one-dimensional / two-dimensional noise reducing device 27, as second the combined information. This means that the pixel information of the current frame about the nearby pixel P2 is selected from the pixel information of the current frame about the nearby pixels P2 to P25.

The one-dimensional / two-dimensional noise reducing device 27 performs a one-dimensional noise reducing process and a two-dimensional noise reducing process for each pixel information of the current frame, by using the second combined information provided from the combining device 26. Incidentally, as the one-dimensional noise reducing process and the two-dimensional noise reducing process of the one-dimensional / two-dimensional noise reducing device 27, it is possible to adopt a known one-dimensional noise reducing process and a known two-dimensional noise reducing process.

The combining device 28 sets a ratio for each of (i) the image information of the current frame in which the three-dimensional noise reducing process is performed by the three-dimensional noise reducing device 24 and (ii) the image information of the current frame in which the one-dimensional noise reducing process and the two-dimensional noise reducing process are performed by the one-dimensional / two-dimensional noise reducing device 27. The combining device 28 combines (i) the image information_of the current frame in which the three-dimensional noise reducing process is performed with (ii) the image information of the current frame in which the one-dimensional noise reducing process and the two-dimensional noise reducing process are performed, in accordance with the ratio. The combined image information of the current frame is outputted to an output terminal 30 and the frame buffer 21. The setting of the ratio is performed on the basis of the movement information provided from the movement and identity detection device 22. For example, if the amount of movement of the image between the frames is large, the ratio set for the image information in which the three-dimensional noise reducing process is performed is 0 or near 0. Incidentally, the combining device 28 can set a ratio of 1 for the image information of the current frame in which the three-dimensional noise reducing process is performed, and a ratio of 0 for the image information of the current frame in which the one-dimensional noise reducing process and the two-dimensional noise reducing process are performed. In this case, only the image information of the current frame in which the three-dimensional noise reducing process is performed is outputted to the output terminal 30 and the frame buffer 21. This means that the image information of the current frame in which the three-dimensional noise reducing process is performed is selected from the image information of the current frame in which the three-dimensional noise reducing process is performed and the image information of the current frame in which the one-dimensional noise reducing process and the two-dimensional noise reducing process are performed.

The movement and identity detection device 22, the combining devices 23, 26, and 28, the noise reducing devices 24 and 27, and the identity detection device 25 can be constructed from an operating circuit and a storage element, such as a semiconductor memory.

The noise reducing apparatus 20 operates as follows. If the image information of the current frame is inputted to the input terminal 29, the image information of the current frame is inputted to the movement and identity detection device 22, the three-dimensional noise reducing device 24, the combining device 26, the identity detection device 25, and the one-dimensional / two-dimensional noise reducing device 27. The movement and identity detection device 22 detects the movement of the image between the frame which is one frame prior to the current frame and the current frame. Then, the movement and identity detection device 22 generates the movement information which indicates the presence or absence, amount, direction or the like of the movement of the image, and outputs this movement information to the combining device 28. Moreover, the movement and identity detection device 22 detects the identity between the pixel information of the current frame about the target pixel and the pixel information of the frame which is one frame prior to the current frame about the plurality of nearby pixels, and outputs the first identity information which indicates the presence or absence, degree or the like of the identity between the both pixel information to the combining device 23. Then, the combining device 23 sets a ratio for each of the pixel information of the frame which is one frame prior to the current frame about the target pixel and the plurality of nearby pixels, on the basis of the first identity information. Then, the combining device 23 mutually combines the pixel information of the frame which is one frame prior to the current frame about the target pixel and the plurality of nearby pixels, in accordance with the set ratio. The combining device 23 outputs the image information obtained by this to the three-dimensional noise reducing device 24, as the first combined information. Then, the three-dimensional noise reducing device 24 performs the three-dimensional noise reducing process for the image information of the current frame, by using the first combined information.

On the other hand, the identity detection device 25 detects the identity between the pixel information about the target pixel and the pixel information about the plurality of nearby pixels in the current frame, and outputs the second identity information which indicates the presence or absence, degree or the like of the identity between the both pixel information to the combining device 26. The combining device 26 sets a ratio for each of the pixel information of the current frame about the plurality of nearby pixels, on the basis of the second identity information. Then, the combining device 26 combines the pixel information of the current frame about the plurality of nearby pixels, in accordance with the set ratio. The combining device 26 outputs the image information obtained by this to the one-dimensional / two-dimensional noise reducing device 27, as the second combined information. Then, the one-dimensional / two-dimensional noise reducing device 27 performs the one-dimensional / two-dimensional noise reducing process for the image information of the current frame, by using the second combined information.

Then, the combining device 28 sets a ratio for the image information of the current frame in which the three-dimensional noise reducing process is performed by the three-dimensional noise reducing device 24 and a ratio for the image information of the current frame in which the one-dimensional noise reducing process and the two-dimensional noise reducing process are performed by the one-dimensional / two-dimensional noise reducing device 27, on the basis of the movement information. And the combining device 28 combines the both image information in accordance with the ratio. The image information of the current frame combined by the combining device 28 is outputted to the output terminal 30 and the frame buffer 21. Then, the frame buffer 21 stores therein the image information of the current frame.

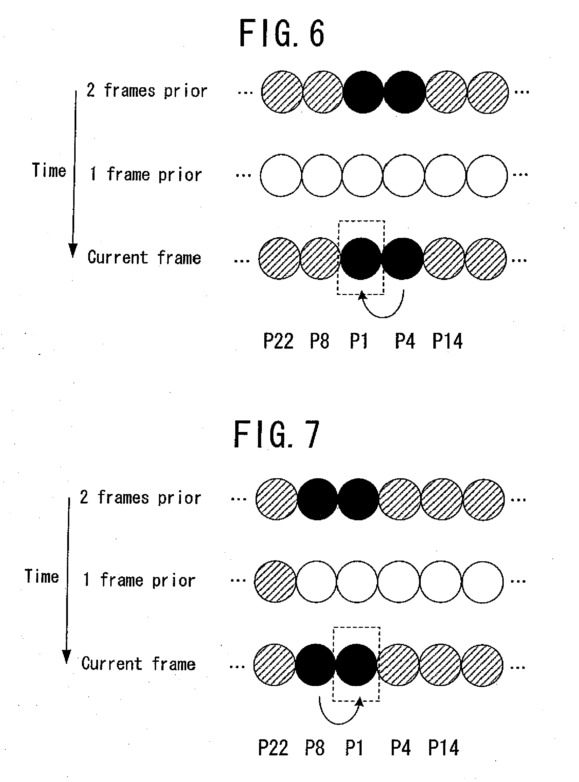

Each of FIG. 6 to FIG. 9 shows the noise reducing process performed by the noise reducing apparatus 20. A small circular graphic in the figures shows a pixel. Six pixels at the lowest level are pixels which constitute one portion of the image information of the current frame. Six pixels at the second lower level are pixels which constitute one portion of the image information of the frame which is one frame prior to the current frame. Six pixels at the highest level are pixels which constitute one portion of the image information of the frame which is two frames prior to the current frame. Moreover, a certain pixel and a pixel just above or just under the certain pixel have the same coordinates in a screen. Moreover, a black graphic, a hatched graphic and a white graphic have different pixel information from each other. For example, the black graphics have the same pixel information, and the black graphic and the hatched graphic have different pixel information. Moreover, the six pixels at each level are pixels P22, P8, P1, P4, and P14 from the left of the figures. The arrangement of the pixels corresponds to that of FIG. 4 and FIG. 5.

According to FIG. 6 and FIG. 7, an image stays still between the frame which is two frames prior to the current frame and the current frame. However, the image has greatly moved between the frame which is one frame prior to the current frame and the current frame. Such a video image is provided if there is an instantly quick movement in the video image, such as a case where the flash of a camera is used to take a picture.

In the case as shown in FIG. 6, the movement and identity detection device 22 of the noise reducing apparatus 20 generates the movement information which indicates an extremely large amount of movement of the image between the frame which is one frame prior to the current frame and the current frame. Moreover, the identity detection device 25 generates the second identity information which indicates extremely high identity between the pixel information about the target pixel P1 and the pixel information about the nearby pixel P4 in the current frame, and the second identity information which indicates low identity between the pixel information about the target pixel P1 and the pixel information about the nearby pixels other than the nearby pixel P4. The combining device 26 sets a ratio of 1 for the pixel information of the current frame about the nearby pixel P4, and a ratio of 0 for the pixel information of the current frame about the nearby pixels other than the nearby pixel P4, for example, in accordance with the second identity information, and combines the pixel information on the basis of the ratios. As a result, when the one-dimensional noise reducing process and the two-dimensional noise reducing process are performed for the target pixel P1, only the pixel information of the current frame about the nearby pixel P4 is provided for the one-dimensional / two-dimensional noise reducing device 27. By this, the one-dimensional / two-dimensional noise reducing device 27 uses only the pixel information of the current frame about the nearby pixel P4, and performs the one-dimensional noise reducing process for the pixel information of the current frame about the target pixel P1. Moreover, the combining device 28 sets a ratio of 0 for the image information of the current frame in which the three-dimensional noise reducing process is performed and a ratio of 1 for the image information of the current frame in which the one-dimensional noise reducing process is performed, for example, in accordance with the movement information. Then, the combining device 28 combines the both image information on the basis of the ratios, and outputs the combined image information of the current frame to the output terminal 30 and the like. As a result, only the image information of the current frame in which the one-dimensional noise reducing process is performed, as shown in FIG. 6, is outputted to the output terminal 30 and the like, as the image information of the current frame.

As described above, if there is an instantly quick movement in the video image, the noise reducing apparatus 20 outputs the pixel information of the current frame in which the one-dimensional noise reducing process and the two-dimensional noise reducing process are performed (incidentally, in some cases, either the one-dimensional noise reducing process or the two-dimensional noise reducing process is only performed, as shown in FIG. 6). Then, in the one-dimensional noise reducing process and the two-dimensional noise reducing process, the pixel information having high identity with the pixel information about the target pixel is selected and used from among the pixel information of the current frame about the plurality of nearby pixels. Namely, the pixel information about an adjacent pixel or pixels in a certain direction is not always used, as in the conventional technology. For example, as shown in FIG. 6, if the identity of the pixel information about the nearby pixel P4 located on the right of the target pixel P1 is high, the pixel information about the nearby pixel P4 is used for the noise reducing process. On the other hand, as shown in FIG. 7, if the identity of the pixel information about the nearby pixel P8 located on the left of the target pixel P1 is high, the pixel information about the nearby pixel P8 is used for the noise reducing process. By this, it is possible to remove noise, and it is also possible to prevent the reduction of the resolution of the video image.

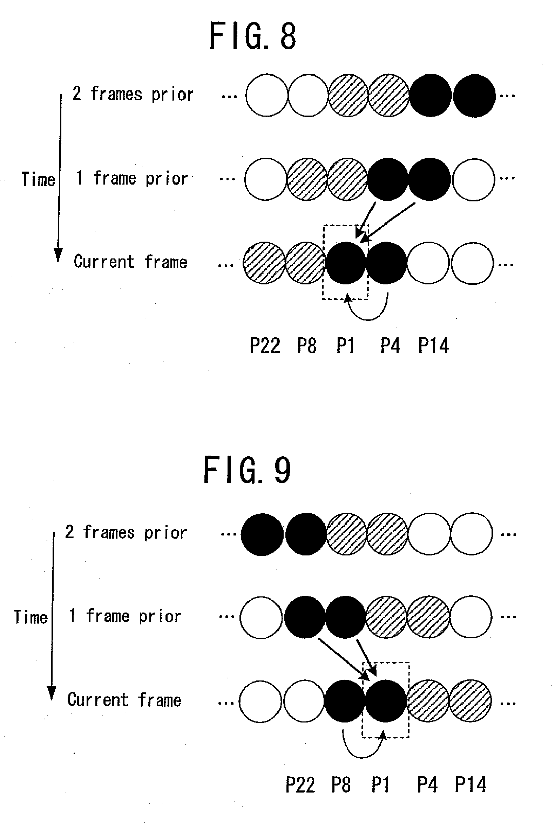

On the other hand, according to FIG. 8, the pixel information about each pixel changes such that it moves from the right side to the left side as the frame proceeds (i.e. as times goes by). Moreover, according to FIG. 9, the pixel information about each pixel changes such that it moves from the left side to the right side as the frame proceeds (i.e. as times goes by). Such a video is provided if there is a relatively mild movement in one portion of the screen.

In the case as shown in FIG. 8, the movement and identity detection device 22 of the noise reducing apparatus 20 generates the movement information which indicates a small amount of movement of the image between the frame which is one frame prior to the current frame and the current frame. Moreover, the movement and identity detection device 22 generates (i) the first identity information which indicates extremely high identity between the pixel information of the current frame about the target pixel P1 and the pixel information of the frame which is one frame prior to the current frame about the nearby pixel P4, (ii) the first identity information which indicates extremely high identity between the pixel information of the current frame about the target pixel P1 and the pixel information of the frame which is one frame prior to the current frame about the nearby pixel P14 and (iii) the first identity information which indicates low identity between the pixel information of the current frame about the target pixel P1 and the pixel information of the frame which is one frame prior to the current frame about the nearby pixels other than the nearby pixels P4 and P14. The combining device 23 sets a ratio of 0.5 for the pixel information of the frame which is one frame prior to the current frame about the nearby pixel P4, a ratio of 0.5 for the pixel information of the frame which is one frame prior to the current frame about the nearby pixel P14, and a ratio of 0 for the pixel information of the frame which is one frame prior to the current frame about the nearby pixels other than the nearby pixels P4 and P14, for example, in accordance with the first identity information, and combines the pixel information on the basis of the ratios. As a result, when the three-dimensional noise reducing process is performed for the target pixel P1, only the pixel information of the frame which is one frame prior to the current frame about the nearby pixels P4 and P14 is provided for the three-dimensional noise reducing device 24. By this, the three-dimensional noise reducing device 24 uses only the pixel information of the frame which is one frame prior to the current frame about the nearby pixels P4 and P14, and performs the three-dimensional noise reducing process for the pixel information of the current frame about the target pixel P1.

Moreover, the identity detection device 25 generates (i) the second identity information which indicates extremely high identity between the pixel information about the target pixel P1 and the pixel information about the nearby pixel P4 in the current frame and (ii) the second identity information which indicates low identity between the pixel information about the target pixel P1 and the pixel information about the nearby pixels other than the nearby pixel P4 in the current frame. The combining device 26 sets a ratio of 1 for the pixel information of the current frame about the nearby pixel P4 and a ratio of 0 for the pixel information of the current frame about the nearby pixels other than the nearby pixel P4, for example, in accordance with the second identity information, and combines the pixel information on the basis of the ratios. As a result, when the one-dimensional noise reducing process and the two-dimensional noise reducing process are performed for the target pixel P1, only the pixel information of the current frame about the nearby pixel P4 is provided for the one-dimensional / two-dimensional noise reducing device 27. By this, the one-dimensional / two-dimensional noise reducing device 27 uses only the pixel information of the current frame about the nearby pixel P4, and performs the one-dimensional noise reducing process for the pixel information of the current frame about the target pixel P1. Moreover, the combining device 28 sets a ratio of 0.5 for the image information of the current frame in which the three-dimensional noise reducing process is performed and a ratio of 0.5 for the image information of the current frame in which the one-dimensional noise reducing process is performed, for example, in accordance with the movement information. Then, the combining device 28 combines the both image information on the basis of the ratios, and outputs the combined image information of the current frame to the output terminal 30 and the like. As a result, the image information of the current frame in which the three-dimensional noise reducing process and the one-dimensional noise reducing process are performed, as shown in FIG. 8, is outputted to the output terminal 30 and the like, as the image information of the current frame.

As described above, if there is a relatively mild movement in one portion of the screen, the noise reducing apparatus 20 outputs the image information of the current frame in which the one dimensional noise reducing process, the two-dimensional noise reducing process and the three-dimensional noise reducing process are performed, as occasion demands, on the basis of the presence or absence, or degree of the identity between the target pixel and each of the plurality of nearby pixels. In the three-dimensional noise reducing process, the pixel information having high identity with the pixel information about the target pixel is selected and used from among the pixel information of the frame which is one frame prior to the current frame about the plurality of nearby pixels. Namely, the pixel information of the frame which is one frame prior to the current frame about a pixel on the same coordinates is not always used, as in the conventional technology. For example, as shown in FIG. 8, if the identity of the pixel information of the frame which is one frame prior to the current frame about the nearby pixels P4 and P14 located on the right of the target pixel P1 is high, the pixel information of the frame which is one frame prior to the current frame about the nearby pixels P4 and P14 is used for the noise reducing process. On the other hand, as shown in FIG. 9, if the identity of the pixel information of the frame which is one frame prior to the current frame about the nearby pixels P8 and P22 located on the left of the target pixel P1 is high, the pixel information about the nearby pixels P8 and P22 is used for the noise reducing process.

As explained above, the noise reducing apparatus 20 performs the one-dimensional / two-dimensional noise reducing process, on the basis of the identity between the pixel information about the target pixel and the pixel information about the plurality of nearby pixels in the current frame. By this, it is possible to prevent the reduction of the resolution of the video image caused by the noise reducing process. Thus, it is possible to obtain sufficiently good image quality.

Moreover, the noise reducing apparatus 20 performs the three-dimensional noise reducing process, on the basis of the identity between the pixel information of the current frame about the target pixel and the pixel information of the frame which is one frame prior to the current frame about the plurality of nearby pixels. By this, it is possible to prevent the trailing tail of the video image, caused by the noise reducing process. Thus, it is possible to obtain sufficiently good image quality.

Incidentally, the frame buffer 21 is a specific example of the storing device of the present invention, and the movement and identity detection device 22 is a specific example of the movement detecting device and the identity detecting device of the present invention. Moreover, the combining devices 23 and 26 are a specific example of the ratio setting device and the combined information generating device of the present invention. Moreover, the noise reducing devices 24 and 27 are a specific example of the noise reducing device and the adding device of the present invention. Moreover, the identity detection device 25 is a specific example of the identity detecting device of the present invention.

Moreover, in the noise reducing apparatus 20, as shown in FIG. 4 and FIG. 5, the case where the identity between the image information about the target pixel P1 and the image information about the plurality of nearby pixels P2 to P25 is detected is exemplified. The present invention, however, is not limited to this. The range of the nearby pixels which are used in detecting the identity may be narrowed. For example, only the nearby pixels P2 to P9 may be used in detecting the identity. On the contrary, the range of the nearby pixels which are used in detecting the identity may be broadened, and not only the nearby pixels P2 to P25 but also other nearby pixels surrounding the nearby pixels P2 to P25 may be used in detecting the identity.

Moreover, the movement and identity detection device 22 or the identity detection device 25 of the noise reducing apparatus 20 may also refer to a history in the past about the identity between the pixel information about the target pixel and the pixel information about the nearby pixels, in order to detect the identity between the pixel information about the target pixel and the pixel information about the nearby pixels. Moreover, the movement and identity detection device 22 or the identity detection device 25 may also refer to the detection result of identity between the pixel information about a different pixel which is different from the target pixel and the pixel information about another pixel located near the different pixel, in order to detect the identity between the pixel information about the target pixel and the pixel information about the nearby pixels. Moreover, the movement and identity detection device 22 or the identity detection device 25 may also refer to the locus of movement of the image corresponding to the image information including the pixel information about the target pixel or the pixel information about the nearby pixels, in order to detect the identity between the pixel information about the target pixel and the pixel information about the nearby pixels. The locus of the movement of the image can be known by the tracking of a history in the past about the movement detection results, or the operation or calculation of a movement vector. The information obtained by the above-mentioned reference may be used to increase the detection accuracy of the movement and identity detection device 22 or the identity detection device 25. Moreover, the information obtained by the above-mentioned reference may be provided for the combining device 23 or 26, as reference information. In this case, the combining device 23 or 26 sets a ratio for the pixel information, on the basis of the reference information and the identity information. By using the information obtained by the above-mentioned reference for the identity detection or the ratio setting, it is possible to effectively remove locally generated significant noise, for example. Alternatively, it is possible to prevent the locally generated significant noise from causing errors in the identity detection or the ratio setting.

Moreover, the noise reducing apparatus 20 has both the three-dimensional noise reducing function and the one-dimensional / two-dimensional noise reducing function; however, the present invention is not limited to this. For example, it may be a noise reducing apparatus which has only the three-dimensional noise reducing function to which the present invention is applied. Alternatively, it may be a noise reducing apparatus which has only the one-dimensional noise reducing function or the two-dimensional noise reducing function to which the present invention is applied.

### (Third Embodiment)

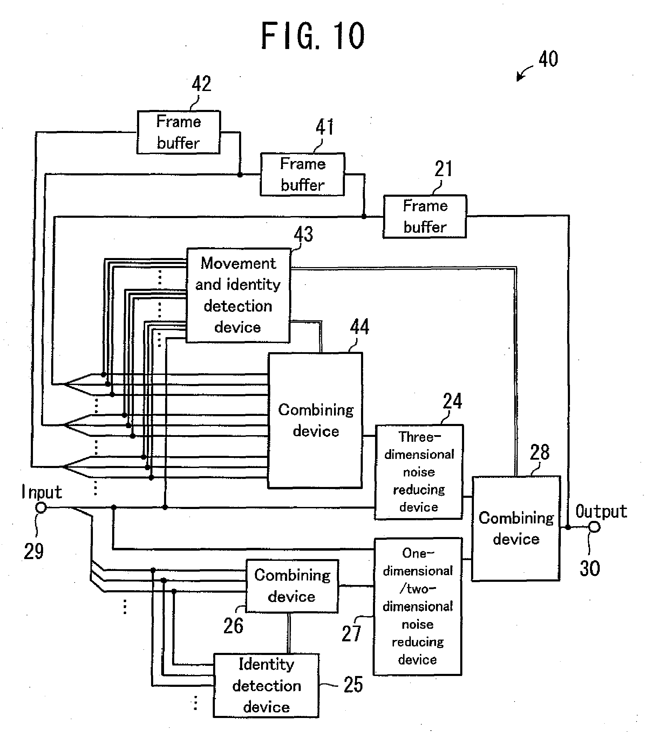

FIG. 10 shows the third embodiment of the noise reducing apparatus and the noise reducing method of the present invention. Incidentally, in the noise reducing apparatus in FIG. 10, the same constitutional elements as those of the noise reducing apparatus 20 shown in FIG. 3 carry the same numerical references, and the explanation thereof is omitted.

A noise reducing apparatus 40 in FIG. 10 has the function of the noise reducing apparatus 20 shown in FIG. 3 and the function of the noise reducing apparatus 10 shown in FIG. 1. Specifically, the noise reducing apparatus 40 has: (i) a function of performing the one-dimensional / two-dimensional noise reducing process by using the pixel information of the current frame about the nearby pixels, which has high identity with the pixel information of the current frame about the target pixel; (ii) a function of performing the three-dimensional noise reducing process by using the pixel information of the frame which is one frame prior to the current frame about the target pixel and the nearby pixels, which has high identity with the pixel information of the current frame about the target pixel; (iii) a function of performing the three-dimensional noise reducing process by using the pixel information of the frame which is two frames prior to the current frame about the target pixel and the nearby pixels, which has high identity with the pixel information of the current frame about the target pixel; and (4) a function of performing the three-dimensional noise reducing process by using the pixel information of the frame which is three frames prior to the current frame about the target pixel and the nearby pixels, which has high identity with the pixel information of the current frame about the target pixel.

In other words, a movement and identity detection device 43 detects each of the movement of the image between the frame which is one frame prior to the current frame and the current frame, the movement of the image between the frame which is two frames prior to the current frame and the current frame and the movement of the image between the frame which is three frames prior to the current frame and the current frame. The movement detection of the image can be performed by comparing the image information of the frame which is one, two or three frames prior to the current frame which are stored in the frame buffer 21, 41 or 42 with the image information of the current frame inputted to the movement and identity detection device 43 through the input terminal 29. Then, the movement and identity detection device 43 provides combining devices 44 and 29 with movement information which indicates each of the presence or absence, amount, direction or the like of the movement of the image between the frame which is one frame prior to the current frame and the current frame, between the frame which is two frames prior to the current frame and the current frame and between the frame which is three frames prior to the current frame and the current frame.

Moreover, the movement and identity detection device 43 detects the identity: (i) between the pixel information of the current frame about the target pixel and the pixel information of the frame which is one frame prior to the current frame about the target pixel and the plurality of nearby pixels; (ii) the pixel information of the current frame about the target pixel and the pixel information of the frame which is two frames prior to the current frame about the target pixel and the plurality of nearby pixels; and (iii) the pixel information of the current frame about the target pixel and the pixel information of the frame which is three frames prior to the current frame about the target pixel and the plurality of nearby pixels. The detection of the identity is performed by comparing the pixel information about the target pixel and the nearby pixels of the frame which is one, two or three frames prior to the current frame which are stored in the frame buffer 21, 41 or 42, with the pixel information within the current frame about the target pixel inputted to the movement and identity detection device 43 through the input terminal 29. Then, the movement and identity detection device 43 provides a combining device 44 with the first identity information which indicates the presence or absence, degree or the like of identity (i) between the pixel information of the current frame about the target pixel and the pixel information of the frame which is one frame prior to the current frame about the target pixel and the plurality of nearby pixels; (ii) the pixel information of the current frame about the target pixel and the pixel information of the frame which is two frames prior to the current frame about the target pixel and the plurality of nearby pixels; and (iii) the pixel information of the current frame about the target pixel and the pixel information of the frame which is three frames prior to the current frame about the target pixel and the plurality of nearby pixels.

The combining device 44 sets a ratio for each of the pixel information of the frame which is one frame prior to the current frame about the target pixel and the plurality of nearby pixels, the pixel information of the frame which is two frames prior to the current frame about the target pixel and the plurality of nearby pixels and the pixel information of the frame which is three frames prior to the current frame about the target pixel and the plurality of nearby pixels, in accordance with the movement information and the first identity information provided from the movement and identity detection device 43. Then, the combining device 44 combines the pixel information in accordance with the set ratio, and provides the pixel information obtained by this for the three-dimensional noise reducing apparatus 24 as the first combined information.

According to the noise reducing apparatus 40 provided with such construction, it is possible to highly accurately prevent the decrease of the video resolution or the occurrence of the trailing tail caused by the noise reducing process, and it is possible to obtain much better image quality.

Incidentally, the frame buffer 21 is a specific example of the first storing device of the present invention, and the frame buffers 41 and 42 are a specific example of the second storing device of the present invention. Moreover, the movement and identity detection device 43 is a specific example of the movement detecting device and the identity detecting device of the present invention. Moreover, the combining device 44 is a specific example of the ratio setting device and the combined information generating device of the present invention.

### (Fourth Embodiment)

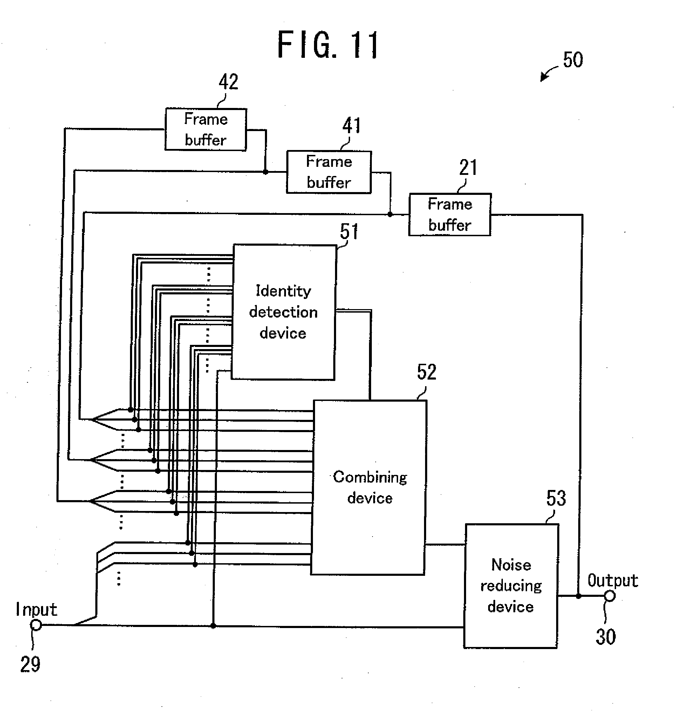

FIG. 11 shows the fourth embodiment of the noise reducing apparatus and the noise reducing method of the present invention. Incidentally, in the noise reducing apparatus in FIG. 11, the same constitutional elements as those of the noise reducing apparatus 40 shown in FIG. 10 carry the same numerical references, and the explanation thereof is omitted.

A noise reducing apparatus 50 in FIG. 11, an identity detection device 51 is obtained by unifying the movement and identity detection device 43 and the identity detection device 25 of the noise reducing apparatus 40 shown in FIG. 10. Moreover, a combining device 52 is obtained by unifying the combining devices 26, 28 and 44 of the noise reducing apparatus 40. Moreover, a noise reducing device 53 is obtained by unifying the noise reducing devices 24 and 27 of the noise reducing apparatus 40.

Namely, the identity detection device 51 detects the identity: (i) between the pixel information of the current frame about the target pixel and the pixel information of the frame which is one frame prior to the current frame about the target pixel and the plurality of nearby pixels; (ii) the pixel information of the current frame about the target pixel and the pixel information of the frame which is two frames prior to the current frame about the target pixel and the plurality of nearby pixels; (iii) the pixel information of the current frame about the target pixel and the pixel information of the frame which is three frames prior to the current frame about the target pixel and the plurality of nearby pixels; and (iv) the pixel information about the target pixel and the pixel information about the plurality of nearby pixels in the current frame. Then, the identity detection device provides the combining device 52 with the identity information which indicates the presence or absence, degree or the like of the above-mentioned identity.

The combining device 52 sets a ratio for each of the pixel information of the frame which is one frame prior to the current frame about the target pixel and the plurality of nearby pixels, the pixel information of the frame which is two frames prior to the current frame about the target pixel and the plurality of nearby pixels, the pixel information of the frame which is three frames prior to the current frame about the target pixel and the plurality of nearby pixels and the pixel information of the current frame about the plurality of nearby pixels, in accordance with the identity information provided from the identity detection device 51. Then, the combining device 52 combines the pixel information in accordance with the set ratio, and provides the pixel information obtained by this for the noise reducing device 53 as the combined information.

The noise reducing device 53 performs the noise reducing process for the pixel information of the current frame, by using the combined information provided from the combining device 52. For example, the noise reducing device 53 sets the ratio according to the noise reduction intensity, for each of the pixel information of the current frame and the combined information, and adds the both in accordance with the ratio.

Even by virtue of the noise reducing apparatus 50 provided with such construction, it is possible to highly accurately prevent the decrease of the video resolution or the occurrence of the trailing tail caused by the noise reducing process, and it is possible to obtain much better image quality.

Incidentally, the identity detection device 51 is a specific example of the identity detecting device of the present invention. The combining device 52 is a specific example of the ratio setting device and the combined information generating device of the present invention. Moreover, the noise reducing device 53 is a specific example of the noise reducing device of the present invention.

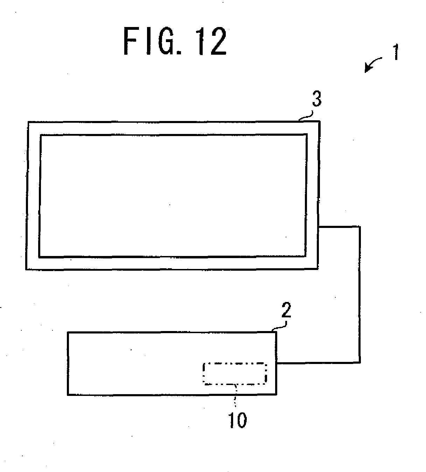

The above-mentioned noise reducing apparatus 10, 20, 40 or 50 can be used for a television receiver or a video recording / reproducing apparatus. For example, FIG. 12 shows a television receiving system using the noise reducing apparatus 10. A television receiving system 1 in FIG. 12 is provided with: a tuner built-in type video recording / reproducing apparatus 2; and a display apparatus 3. The video recording / reproducing apparatus 2 is provided with: a TV tuner; a hard disk drive; an optical disk drive; and the like. The video recording / reproducing apparatus 2 can receive a video signal and can record and reproduce a video image. The display apparatus 3 is, for example, a plasma display apparatus, and displays the video image corresponding to the video signal received by the tuner of the video recording / reproducing apparatus 2. The noise reducing apparatus 10 is disposed within the video recording / reproducing apparatus 2, and performs the noise reducing process for the image information and the pixel information included in the video signal received by the tuner. According to the television receiving system 1 provided with the noise reducing apparatus 10, it is possible to highly accurately prevent the decrease of the video resolution or the occurrence of the trailing tail caused by the noise reducing process, and it is possible to obtain much better image quality. Incidentally, the television receiving system 1 is a specific example of the television receiving apparatus and the video recording / reproducing apparatus of the present invention.

Moreover, the noise reducing apparatus and the noise reducing method of the present invention can be also realized by a computer program or a computer program product in a computer-readable medium. For example, it is possible to make a computer function as the noise reducing apparatus, by preparing a computer program to realize the above-mentioned movement detection, identity detection, combining process, and noise reducing process, or the like, and by making the computer read the computer program. In this case, it is also possible to make a semiconductor memory mounted on the computer in advance function as the frame buffer.

## Claims

1. A noise reducing apparatus **characterized in that** said noise reducing apparatus comprises:
a first storing device for storing therein image information of a frame which is one frame prior to a current frame;
a second storing device for storing therein image information of a frame which is n frames prior to the current frame (n is an integer of two or more);
a ratio setting device for setting a ratio between the image information of the frame which is one frame prior to the current frame and the image information of the frame which is n frames prior to the current frame (including a case where one is 0 and the other is 1);
a combined information generating device for generating combined information obtained by mutually combining the image information of the frame which is one frame prior to the current frame and the image information of the frame which is n frames prior to the current frame, in accordance with the ratio; and
a noise reducing device for performing a noise reducing process for image information of the current frame, by using the combined information.

2. The noise reducing apparatus according to claim 1, **characterized in that**
said noise reducing apparatus further comprises a movement detection device for detecting movement of an image between the frame which is one frame prior to the current frame and the current frame, and movement of an image between the frame which is n frames prior to the current frame and the current frame, and
said ratio setting device sets the ratio on the basis of a detection result of said movement detecting device.

3. The noise reducing apparatus according to claim 1, **characterized in that** said noise reducing device comprises an adding device for adding the combined information and the image information of the current frame.

4. A noise reducing apparatus **characterized in that** said noise reducing apparatus comprises:
a ratio setting device for setting a ratio between m pixel information corresponding to m second pixels (m is an integer of two or more) located near a first pixel (including a case where the ratio of one pixel information is 1 and a case where the ratio of 1 to (m-1) pixel information is 0);
a combined information generating device for generating combined information obtained by mutually combining the m pixel information, in accordance with the ratio; and
a noise reducing device for performing a noise reducing process for pixel information corresponding to the first pixel, by using the combined information.

5. A noise reducing apparatus **characterized in that** said noise reducing apparatus comprises:
a storing device for storing therein image information of a frame which is one frame prior to a current frame;
a ratio setting device for setting a ratio between m pixel information, included in the image information of the frame which is one frame prior to the current frame and corresponding to m second pixels (m is an integer of two or more) located near a first pixel (including a case where the ratio of one pixel information is 1 and a case where the ratio of 1 to (m―1) pixel information is 0);
a combined information generating device for generating combined information obtained by mutually combining the m pixel information, in accordance with the ratio; and
a noise reducing device for performing a noise reducing process for pixel information of the current frame and corresponding to the first pixel, by using the combined information.

6. A noise reducing apparatus **characterized in that** said noise reducing apparatus comprises:
a storing device for storing therein image information of a frame which is n frames prior to a current frame (n is an integer of two or more);
a ratio setting device for setting a ratio between m pixel information, included in the image information of the frame which is n frames prior to the current frame and corresponding to m second pixels (m is an integer of two or more) located near a first pixel (including a case where the ratio of one pixel information is 1 and a case where the ratio of 1 to (m―1) pixel information is 0);
a combined information generating device for generating combined information obtained by mutually combining the m pixel information, in accordance with the ratio; and
a noise reducing device for performing a noise reducing process for pixel information of the current frame and corresponding to the first pixel, by using the combined information.

7. The noise reducing apparatus according to claim 4, **characterized in that**
said noise reducing apparatus further comprises an identity detecting device for detecting identity between the pixel information corresponding to the first pixel and the pixel information corresponding to the second pixel, and
said ratio setting device sets the ratio on the basis of a detection result of said identity detecting device.

8. The noise reducing apparatus according to claim 7, **characterized in that** said identity detecting device refers to a history in the past about the identity between the pixel information corresponding to the first pixel and the pixel information corresponding to the second pixel, in order to detect the identity between the pixel information corresponding to the first pixel and the pixel information corresponding to the second pixel.

9. The noise reducing apparatus according to claim 7, **characterized in that** said identity detecting device refers to a detection result of identity between pixel information about a third pixel which is different from the first pixel and pixel information about a fourth pixel located near the third pixel, in order to detect the identity between the pixel information corresponding to the first pixel and the pixel information corresponding to the second pixel.

10. The noise reducing apparatus according to claim 7, **characterized in that** said identity detecting device refers to a locus of movement of an image corresponding to image information including the pixel information corresponding to the first pixel or the pixel information corresponding to the second pixel, in order to detect the identity between the pixel information corresponding to the first pixel and the pixel information corresponding to the second pixel.

11. The noise reducing apparatus according to claim 4, **characterized in that** said noise reducing device comprises an adding device for adding the combined information and pixel information of the current frame which corresponds to the first pixel.

12. A noise reducing method **characterized in that** said noise reducing method comprises:
a ratio setting process of setting a ratio between image information of a frame which is one frame prior to a current frame and image information of a frame which is n frames prior to the current frame (including a case where one is 0 and the other is 1);
a combined information generating process of generating combined information obtained by mutually combining the image information of the frame which is one frame prior to the current frame and the image information of the frame which is n frames prior to the current frame, in accordance with the ratio; and
a noise reducing process of performing a noise reducing process for image information of the current frame, by using the combined information.

13. A noise reducing method **characterized in that** said noise reducing method comprises:
a ratio setting process of setting a ratio between m pixel information corresponding to m second pixels (m is an integer of two or more) located near a first pixel (including a case where the ratio of one pixel information is 1 and a case where the ratio of 1 to (m―1) pixel information is 0);
a combined information generating process of generating combined information obtained by mutually combining the m pixel information, in accordance with the ratio; and
a noise reducing process of performing a noise reducing process for pixel information corresponding to the first pixel, by using the combined information.

14. A noise reducing method **characterized in that** said noise reducing method comprises:
a ratio setting process of setting a ratio between m pixel information, included in image information of a frame which is one frame prior to a current frame and corresponding to m second pixels (m is an integer of two or more) located near a first pixel (including a case where the ratio of one pixel information is 1 and a case where the ratio of 1 to (m-1) pixel information is 0);
a combined information generating process of generating combined information obtained by mutually combining the m pixel information, in accordance with the ratio; and
a noise reducing process of performing a noise reducing process for pixel information of the current frame and corresponding to the first pixel, by using the combined information.

15. A noise reducing method **characterized in that** said noise reducing method comprises:
a ratio setting process of setting a ratio between m pixel information, included in image information of a frame which is n frames prior to a current frame and corresponding to m second pixels (m is an integer of two or more) located near a first pixel (including a case where the ratio of one pixel information is 1 and a case where the ratio of 1 to (m-1) pixel information is 0);
a combined information generating process of generating combined information obtained by mutually combining the m pixel information, in accordance with the ratio; and
a noise reducing process of performing a noise reducing process for pixel information of the current frame and corresponding to the first pixel, by using the combined information.

16. A television receiver **characterized in that** said television receiver comprises: the noise reducing apparatus according to any one of claims 1 to 11.

17. A video recording / reproducing apparatus **characterized in that** said video recording / reproducing apparatus comprises: the noise reducing apparatus according to any one of claims 1 to 11.

18. A computer program **characterized in that** said computer program makes a computer function as the noise reducing apparatus according to any one of claims 1 to 11.
